(19) Europäisches Patentamt
European Patent Office
Office européen des brevets

(11) EP 4 085 388 B1

(12) **EUROPEAN PATENT SPECIFICATION**

(45) Date of publication and mention
of the grant of the patent:
**24.12.2025 Bulletin 2025/52**

(21) Application number: **20835793.9**

(22) Date of filing: **18.12.2020**

(51) International Patent Classification (IPC):
**G06N 3/049** (2023.01)     **G06N 3/063** (2023.01)
**G06N 3/047** (2023.01)     **G06N 3/048** (2023.01)

(52) Cooperative Patent Classification (CPC):
**G06N 3/049; G06N 3/047; G06N 3/048;
G06N 3/0499; G06N 3/063; G06N 3/09**

(86) International application number:
**PCT/EP2020/086946**

(87) International publication number:
**WO 2021/136685 (08.07.2021 Gazette 2021/27)**

(54) **NOVEL ACTIVATION FUNCTION IMPLEMENTATION**

NEUARTIGE AKTIVIERUNGSFUNKTIONSIMPLEMENTIERUNG

NOUVELLE MISE EN OEUVRE D'UNE FONCTION D'ACTIVATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2020 GB 202000049
27.05.2020 GB 202007934**

(43) Date of publication of application:
**09.11.2022 Bulletin 2022/45**

(73) Proprietor: **Nokia Technologies Oy
02610 Espoo (FI)**

(72) Inventors:
• **PATEL, Nitish
Auckland (NZ)**
• **WURAOLA, Adedamola Solape
Auckland (NZ)**

(74) Representative: **Sayer, Robert David
Venner Shipley LLP
200 Aldersgate
London EC1A 4HD (GB)**

(56) References cited:
**CN-A- 110 610 235**     **US-A1- 2019 042 922**

• WURAOLA ADEDAMOLA ET AL: "SQNL: A New Computationally Efficient Activation Function", 2018 INTERNATIONAL JOINT CONFERENCE ON NEURAL NETWORKS (IJCNN), IEEE, 8 July 2018 (2018-07-08), pages 1 - 7, XP033418857, DOI: 10.1109/IJCNN.2018.8489043
• HIKAWA H ED - DIBAZAR A A ET AL: "Digital pulse mode neuron with robust nonlinear activation function", NEURAL NETWORKS, 2004. PROCEEDINGS. 2004 IEEE INTERNATIONAL JOINT CONFERENCE ON, IEEE, PISCATAWAY, NJ, USA, vol. 4, 25 July 2004 (2004-07-25), pages 2665 - 2670, XP010759368, ISBN: 978-0-7803-8359-3, DOI: 10.1109/IJCNN.2004.1381069
• DANIEL LARKIN ET AL: "An Efficient Hardware Architecture for a Neural Network Activation Function Generator", 1 January 2006, ADVANCES IN NEURAL NETWORKS - ISNN 2006 LECTURE NOTES IN COMPUTER SCIENCE;;LNCS, SPRINGER, BERLIN, DE, PAGE(S) 1319 - 1327, ISBN: 978-3-540-34482-7, XP019033974

EP 4 085 388 B1

## Description

### Field

Example embodiments relate to an apparatus and method for implementing an activation function for machine learning applications.

### Background

Machine learning (ML) involves the use of algorithms and/or models in one or more computers or dedicated processing devices to perform a given task without using explicit instructions. Machine learning and machine learning paradigms are becoming increasingly common, as are devices for implementing them. The use of machine learning may comprise a learning phase, an implementation engine, and an algorithm to match the problem and the implementation engine. The implementation engine, sometimes called an inference engine, may be one or more of a standard computer or an embedded device, e.g. an Application Specific Integrated Circuit (ASIC) or Field Programmable Gate Array (FPGA) or similar integrated circuit implementation. Part of a machine learning implementation may involve computation of a non-linear function, referred to as the activation function (AF) which is applied to received input data e.g. the sum of weighted outputs from preceding neural network nodes.

Wuraola Adedamola et al: "SONL: A New Computationally Efficient Acivation Function", 2018 International Joint Conference on Neural Networks (IJCNN), IEEE, 8 July 2018 discloses a new activation function.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus, comprising means for: receiving first input data at a sample rate $fs$, the first data representing fixed-length integer values from part of a machine learning model; providing second input data at an oversampling rate $N fs$, wherein $N$ is an integer greater than one, the second input data representing a sequence of non-repeating integers; summing the first and second input data to produce first output data, wherein the summed output is limited within a predetermined first output range $C$; subtracting the second input data from the first output data to produce second output data, wherein the second output data is limited within a predetermined second output range; and processing the second output data to perform a binary filtering operation to produce third output data.

Processing the second output data to perform the binary filtering operation may comprise accumulating a predetermined number of sequential values to produce fourth output data and performing a right shift operation on the binary representation of said fourth output data to produce the third output data.

The sequence of non-repeating numbers may be produced by a binary counter. The counter may have a count range $-U \rightarrow (U-1)$ and the oversampling rate $Nfs$ may be an integer multiple of the count range $2 \times U$. $N$ may be based on an integer power of two, and the right shift operation may be dependent on the value of $N$.

The first output range $C$ may be a signed integer limited to a maximum positive and negative value based on the range $M$ of the first input data. The predetermined first output range $C$ may be defined as: $C = M/2$.

The predetermined second output range may be equal to the range $M$ of the first input data.

The sequence of non-repeating integers may comprise only negative numbers. The oversampling rate $N fs$ may be an integer multiple of the count range $2 \times U$.

$N$ may be based on an integer power of two, and the right shift operation may be dependent on the value of $N$.

The first output range C may be configured to have asymmetric upper and lower limits.

The apparatus may further comprise means for varying the upper and lower limits.

The varying means may comprise means for summing a variable alpha input and the sequence of non-repeating integers numbers to provide modified second input data.

Processing the second output data may comprise using an adder and latch to accumulate the predetermined number of sequential values.

The apparatus may further comprise a resizer to set the first input data to a predetermined first fixed-length integer value of R bits.

The apparatus may be configured to implement an activation function on the first input data within a neural network.

The activation function may take the form:

$$y(n) = \begin{cases} n - \dfrac{n(n+1)}{2N} & : n \text{ is positive} \\ n + \dfrac{n(n+1)}{2N} & : n \text{ is negative} \end{cases}$$

where n is the first input data, y(n) is the output data and N is an oversampling rate.

The activation function may take the form:

$$y(n) = \begin{cases} n & : n > 0 \\ n + \dfrac{n^2}{4} & : -2.0 \leq n < 0 \\ -1 & : n \leq -2.0 \end{cases}$$

where n is the first input data and y(n) is the output data.

The activation function may take the form:

$$y(n) = \begin{cases} n & : n > 0.5 \\ \dfrac{n+0.5^2}{2} & : -0.5 \leq n < 0.5 \\ 0 & : n \leq -2.0. \end{cases}$$

where n is the first input data and y(n) is the output data.

The apparatus may comprise multiple such means arranged to operate substantially in parallel to provide at least part of a neural network.

The apparatus may be a dedicated integrated circuit, e.g. an ASIC or FPGA.

According to a second aspect, this specification describes a system, the system comprising: a neural network comprising one or more nodes of a neural network layer for being processed substantially in parallel, wherein each node comprises an apparatus of any preceding definition as described with reference to the first aspect.

The system may be a portable user terminal.

According to a third aspect, this specification describes a method, comprising: receiving first input data at a sample *ratefs,* the first data representing fixed-length integer values from part of a machine learning model; providing second input data at an oversampling rate *N fs* , wherein *N* is an integer greater than one, the second input data representing a sequence of non-repeating integers; summing the first and second input data to produce first output data, wherein the summed output is limited within a predetermined first output range *C;* subtracting the second input data from the first output data to produce second output data, wherein the second output data is limited within a predetermined second output range; and processing the second output to perform a binary filtering operation to produce third output data.

Processing the second output data to perform the binary filtering operation may comprise accumulating a predetermined number of sequential values to produce fourth output data and performing a right shift operation on the binary representation of said fourth output data to produce the third output data.

The sequence of non-repeating numbers may be produced using a binary counter. The counter may have a count range $-U \rightarrow (U - 1)$ and the oversampling rate *Nfs* may be an integer multiple of the count range $2 \times U$. *N* may be based on an integer power of two, and the right shift operation may be dependent on the value of *N*.

The first output range C may be a signed integer limited to a maximum positive and negative value based on the range *M* of the first input data. The predetermined first output range *C* may be defined as: *C = M/2.*

The predetermined second output range may be equal to the range *M* of the first input data.

The sequence of non-repeating integers may comprise only negative numbers. The oversampling rate *N fs* may be an integer multiple of the count range $2 \times U$.

*N* may be based on an integer power of two, and the right shift operation may be dependent on the value of *N*.

The first output range C may be configured to have asymmetric upper and lower limits.

The apparatus may further comprise means for varying the upper and lower limits.

The varying means may comprise means for summing a variable alpha input and the sequence of non-repeating integers numbers to provide modified second input data.

Processing the second output data may comprise adding and latching to accumulate the predetermined number of sequential values.

The method may further comprise resizing to set the first input data to a predetermined first fixed-length integer value of *R* bits.

The method may comprise implementing an activation function on the first input data within a neural network.

The activation function may take the form:

$$
y(n) = \begin{cases} n - \dfrac{n(n+1)}{2N} & : n \ is \ positive \\[2mm] n + \dfrac{n(n+1)}{2N} & : n \ is \ negative \end{cases}
$$

where n is the first input data, y(n) is the output data and N is an oversampling rate.

The activation function may take the form:

$$
y(n) = \begin{cases} n & : n > 0 \\[2mm] n + \dfrac{n^2}{4} & : -2.0 \le n < 0 \\[2mm] -1 & : n \le -2.0 \end{cases}
$$

where n is the first input data and y(n) is the output data.

The activation function may take the form:

$$
y(n) = \begin{cases} n & : n > 0.5 \\[2mm] \dfrac{n + 0.5^2}{2} & : -0.5 \le n < 0.5 \\[2mm] 0 & : n \le -2.0. \end{cases}
$$

where n is the first input data and y(n) is the output data.

The method may be performed multiple times in parallel to provide at least part of a neural network.

The method may be performed on a dedicated integrated circuit, e.g. an ASIC or FPGA.

According to a fourth aspect, this specification describes computer-readable instructions which, when executed by computing apparatus, cause the computing apparatus to perform any method as described with reference to the third aspect.

According to a fifth aspect, this specification describes a computer program comprising instructions for causing an apparatus to perform any method as described with reference to the third aspect.

According to a sixth aspect, this specification describes a computer-readable medium (such as a non-transitory computer-readable medium) comprising program instructions stored thereon for performing the method of: receiving first input data at a sample rate *fs,* the first data representing fixed-length integer values from part of a machine learning model; providing second input data at an oversampling rate *N fs* , wherein *N* is an integer greater than one, the second input data representing a sequence of non-repeating integers; summing the first and second input data to produce first output data, wherein the summed output is limited within a predetermined first output range *C;* subtracting the second input data from the first output data to produce second output data, wherein the second output data is limited within a predetermined second output range; and processing the second output to perform a binary filtering operation to produce third output data.

According to a seventh aspect, this specification describes an apparatus comprising: at least one processor; and at least one memory including computer program code which, when executed by the at least one processor, causes the apparatus to: receive first input data at a sample rate*fs,* the first data representing fixed-length integer values from part of a machine learning model; provide second input data at an oversampling rate *Nfs* , wherein *N* is an integer greater than one, the second input data representing a sequence of non-repeating integers; sum the first and second input data to produce first output data, wherein the summed output is limited within a predetermined first output range *C;* subtract the second input data from the first output data to produce second output data, wherein the second output data is limited within a predetermined second output range; and process the second output to perform a binary filtering operation to produce third output data.

## Description of Drawings

Example embodiments will now be described, by way of non-limiting example, with reference to the accompanying drawings, in which:

FIG. 1 is a schematic view of a system for implementing an activation function for machine learning;
FIG. 2 is a graph showing a transfer characteristic for the FIG. 1 system;
FIG. 3 is a graph showing how the FIG. 2 transfer characteristic may be mapped onto approximate equivalents of known activation functions;
FIG. 4 is a schematic view of a system for implementing an activation function for machine learning according to some example embodiments;
FIG. 5 is a graph indicating part of a simulated transfer characteristic for the FIG. 4 system, using different gainset parameters;
FIG. 6 is a graph indicating part of a simulated transfer characteristic for the FIG. 4 system, using different oversampling parameters;
FIGS. 7A and 7B are, respectively, error histograms for the FIG. 4 system using 8 and 12 -bit resolution, using different oversampling parameters;
FIG. 8 is a graph indicative of a simple fit regression dataset for two forms of simulation, one form using floating point representation and the other using fixed point representation;
FIG. 9 is a schematic diagram of an example application of a system according to an example embodiment;
FIG. 10 is a schematic representation of a processing node, or neuron, being part of a neural network and useful for understanding example embodiments;
FIG. 11 is a table showing predicted gate count for implementing a system on silicon for various different parameters using the FIG. 4 system according to example embodiments;
FIG. 12 is a graph showing simulated transfer characteristics of asymmetric activation functions according to some example embodiments;
FIG. 13 is a graph showing simulated transfer characteristics of asymmetric activation functions for comparison with FIG. 12;
FIG. 14 is a schematic view of a system for implementing an activation function according to some example embodiments; and
FIG. 15 is a graph showing simulated transfer characteristics of the FIG. 14 schematics using different variables.

## Detailed Description

Example embodiments relate to apparatuses, systems and methods for providing at least part of the functionality of a machine learning (ML) apparatus. The term machine learning may be considered a subset of the Artificial Intelligence (AI). Machine learning generally involves the use of computational models and/or algorithms for performing a specific task without using explicit instructions. Example applications include classification, clustering, regression and dimensionality reduction, although example embodiments are not limited to any particular model or application.

Artificial neural networks, more commonly referred to as neural networks, are a class of machine learning algorithm used to model patterns in datasets using a topology comprising, for example, an input layer, an output layer and one or more hidden layers in-between said input and output layers, which use a non-linear activation function (AF). The purpose of the non-linear activation function is explained below. After training the neural network, in an inference phase, the neural network takes input, passes it through the one or more hidden layers, each comprising multiple trained nodes or "neurons", and outputs, for example, a prediction representing the combined input of the neurons. Training of the neural network may be performed iteratively, for example using an optimization technique such as gradient descent.

Example embodiments relate to implementation of the non-linear activation function for use in a neural network or related machine learning paradigms. It will be assumed that reference hereafter to "activation function" means a non-linear activation function. Example embodiments may include symmetric and asymmetric activation function types.

Example embodiments relate to particular forms of activation function which can be processed without the use of a floating-point unit (FPU). FPUs require power, space and speed. Given that processing neural networks ideally involves parallel operations on a plurality of neurons within each hidden layer, a plurality of FPUs may be required to provide useful results. Even on a standard computer, only a limited number of FPUs may be available. The usage of FPUs on dedicated devices where power, space and/or speed is limited may not therefore be viable or even possible. Such dedicated devices may tend to use simpler AF approximations which in practise can limit accuracy and/or usefulness.

Example embodiments provide alternative forms of activation function for machine learning applications which are easier to process than traditional functions which involve computing an exponential function. For example, the activation functions may be such that data may be processed entirely in integer representation rather than in floating point representation. This has the consequence that hardware circuitry required may comprise most of not all combinatorial logic which offers advantages in terms of power, space and speed, whilst also being cost-effective whilst still maintaining accuracy.

Example embodiments also provide an apparatus for implementing the alternative form of activation function. The apparatus may comprise one or more dedicated electronic devices, including, but not limited to, ASICs, FPGAs and/or microcontrollers, configured to implement said activation function. Example embodiments enable implementation of neural network functionality onto a large number of portable and non-portable electronic devices, including, without limitation, mobile telephones, tablet computers and digital assistants.

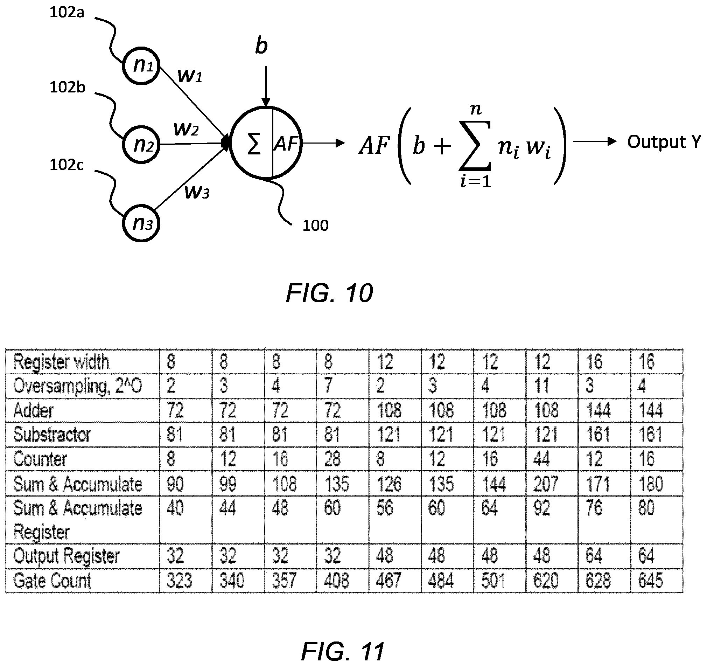

FIG. 10 shows in schematic view a processing node 100 within a hidden layer of a notional neural network configured as an inference engine, i.e. previously trained. The node 100 may receive one or more inputs 102a - 102c. There may also be defined weights Wi for the respective inputs 102a - 102c and, optionally, a bias parameter b. The weighted sum of the inputs $n_i$, and the bias parameter b, is applied to an activation function *AF* to produce an output *Y* of the node 100. The activation function *AF* is therefore a form of transfer function. The preferred form of activation function is non-linear because it keeps the outputs confined within some range and makes it easier for the inference engine to generalize or adapt to a variety of data and differentiate the outputs. Further explanation as to the advantages of using non-linear as opposed to linear activation functions is not necessary and already well appreciated in the art.

A preferred form of inference engine may comprise many instances, e.g. hundreds, of such neurons or nodes 100, having respective activation functions operating in parallel on multiple inputs. Widely-used activation functions include the TanSig and LogSig functions, respectively indicated as equations (1) and (2) below.

$$y = tansig\ (n) = \frac{1}{1+e^{-2n}} - 1 \qquad\qquad (1)$$

$$y = logsig(n) = \frac{1}{1+e^{-n}} \qquad\qquad (2)$$

As mentioned above, computation of the exponent is expensive in terms of the number of clocks and digital resources.

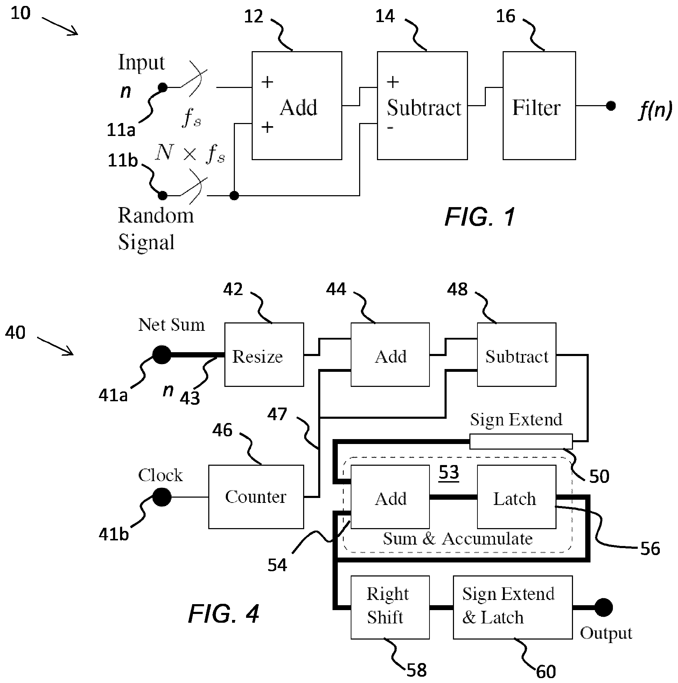

An alternative activation function has been proposed below, which is implemented using a system 10 illustrated in FIG. 1. Said activation function is an example of a symmetric activation function.

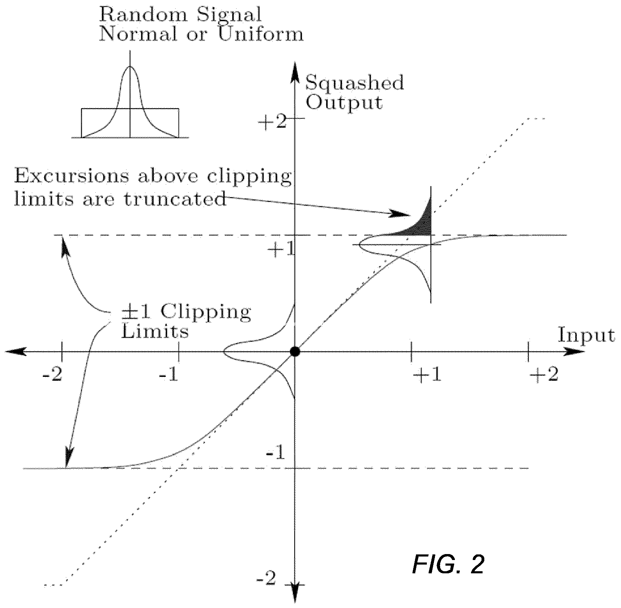

Referring to FIG. 1, the system 10 comprises a saturating adder 12, a saturating subtractor 14 and a filter 16. The saturating adder 12 receives first and second inputs 11a, 11b. The first input 11a comprises the weighted sum of the inputs n at a sample rate *fs* and the second input is an oversampled signal comprising a sequence of non-repeating values, e.g. a pseudorandom sequence, with uniform distribution ranging +/- 1.0 and sampled at *N fs,* where *N* is an integer greater than one. Hence, each input n is added to a plurality of "random" values. The saturating adder 12 is hard limiting and hence all sums in excess of the predefined positive and negative limit are clipped. The output from the saturating adder 12 is provided as a first input to the saturating subtractor 14 and the same oversampled signal is provided as a second input to the saturating subtractor. The saturating subtractor 14 is also hard limiting, not necessarily to the same limits as the subtracting adder 12 (e.g. it may be twice that of the adder) and hence the subtractor attempts to recover the original input *n.* If the value of the input *n* is small in magnitude, then adding it to the random signal may not result in any clipping and the original input n may be recovered. If however the original input n is relatively large, then addition of the random signal may result in clipping and the saturating subtractor 14 will not recover the original input *n.* The filter 16 is configured to smooth the output from the saturating subtractor 14. Because a subset of the outputs from the saturating subtractor 14 may have reduced magnitude, the filtered outputs *f(n)* for said subsets will also have reduced magnitude. The resulting transfer function is therefore non-linear, as shown in FIG. 2

Referring to FIG. 2, the fully recovered original input n is seen by the linear region around the region (0,0) of the shown transfer function. Around the region (1,1) the non-linear characteristic is evident. If distribution of the random signal has a very small variance, it is found that the non-linear characteristic will be narrower, e.g. it will not become evident until the signal is very close to (1, 1). However, if the variance is large, then the non-linear characteristic will become evident well before (1, 1). Hence, the variance of the random signal can be used to shape the non-linearity.

In simulating the FIG. 1 system 10 using MATLAB, a random signal with a uniform distribution was applied with a range of $\pm 1.0$. The saturating adder 12 had its hard-limit set at $\pm 1.0$ while the saturating subtractor 14 had its hard limit set at $\pm 2.0$. The output was fitted to an approximate TanSig function, as shown by equation (3) below.

$$f(n) = \frac{2}{1+e^{-an-bn^3}} - 1 \qquad\qquad (3)$$

A particular MATLAB simulation results in a= 1.81 and b = 0.18 (compared with a = 2.0 and b= 0 for TanSig) and exhibits a root mean squared (RMS) error of 0.023. This indicates that there is a small error between the fitted equation (3) and the actual data, although (3) requires an additional term compared with the TanSig function, albeit one with a small coefficient of 0.18. It is therefore seen that the mapping is close to a TanSig function and can be viewed as an approximate TanSig function.

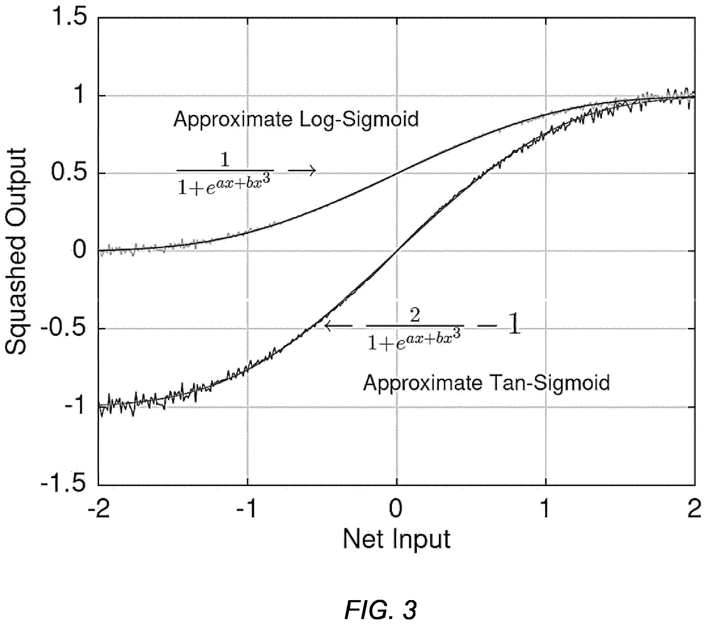

FIG. 3 is a plot of said MATLAB simulation. The traces with the jitter are the outputs of the simulated squashing function while the solid trace is a plot of equation (3) with the fitted parameters. If (x) is scaled and shifted by +0.5, an approximate LogSig function may be produced. This has also been simulated and the output is presented in FIG. 3.

The activation function produced using a uniform random signal applied to the system 10 of FIG. 1 can be precisely described by a new form of activation function given in equation (4) below, which has been validated using multiple benchmark datasets.

$$y(n) = \begin{cases} 1 & : n \geq 2.0 \\ n - \dfrac{n^2}{4} & : n \leq 0 < 2.0 \\ n + \dfrac{n^2}{4} & : -2.0 < n < 0 \\ -1 & : n \leq -2.0 \end{cases} \qquad\qquad (4)$$

Generation of high quality random numbers is resource hungry, particularly on ASICs and FPGAs. However, the oversampling and subsequent filtering described above implies that lack of correlation between any two of uniform sources is not required.

In a digital domain, an uncorrelated random signal is not required. A simple binary counter produces non-repeating values. The subsequent averaging can be synchronised with the counter reaching its 'terminal count'.

FIG.4 shows a system 40 according to one or more example embodiments. The system 40 comprises a saturating adder 44, a saturating subtractor 48, a sum-and-accumulator unit 53 comprising an adder 54 and latch 56, and may comprise a resizer 42, a binary counter 46, a sign extender 50, a right-shifter 58 and a sign extender and latch unit 60.

Similar to the FIG. 1 system 10, the system 40 receives, retrieves or provides first inputs 41a. The first inputs 41a for the saturating adder 44 may be a first fixed length signed integer $R$, e.g. 8 bits, 12 bits or 16 bits. The value of R sets an input range $M = \pm 2^{R-1}-1$. So, where $R = 8$, $M = \pm 127$. The resizer 42 may be configured to resize the number of bits of the first inputs 41a so that input to the saturating adder 44 is a first fixed length integer R. This is because the number of received bits can vary quite significantly depending on the values of the inputs and their respective weights wi. The thickness of an input bus 43 for the first input 41a is indicative that a larger bus size can be provided to cater for large values and the resizer 42 may adapt larger values to a reduced, predetermined number of bits R, and may also pad-out smaller values to provide said predetermined number of bits.

The system 40 provides a clock 41 connected to the binary counter 46 in order to produce the non-repeating sequence as a second input 47. Similar to FIG. 1, the clock 41 may have a rate that is an integer multiple $N$ of the first input sample rate $fs$. The binary counter 46 may have a swing between $\pm U$ around zero. Similar to FIG. 1 the saturating adder 44 receives the first and second inputs 41a, 47.

As with the FIG. 1 system, each input n is added to "oversampled" values 47 from the binary counter 46, produced using an appropriate clock rate at $N\,fs$, where $N$ is an integer greater than one.

The saturating adder 44 is hard limiting and hence all sums in excess of a predefined positive and negative limit are clipped. The range (limits) of the saturating adder 44 may be defined as $\pm C$ and, in some embodiments, $C = M/2$. The output from the saturating adder 44 is provided as a first input to the saturating subtractor 48 and the same oversampled values 47 are provided as a second input to the saturating subtractor. The saturating subtractor 48 is also hard limiting, possibly with different limits as the saturating adder 42, and hence the subtractor attempts to recover the original input n. For example, the subtracting may have a range (limits) defined as $\pm M$, i.e. the same as the input range.

As before, if the value of the input $n$ is small in magnitude, then adding it to the counter value may not result in any clipping and the original input $n$ may be recovered. If however the original input $n$ is relatively large, then addition of the counter value may result in clipping and the saturating subtractor 48 will not recover the original input n.

Instead of using a filter, as in the FIG. 1 system 10, a sum and accumulation unit 53 is provided which can be implemented using combinatorial logic, as is known. Beforehand, the sign extender 50 may be configured to increase the number of bits to a second fixed length integer representation given that the represented values may increase beyond the range of $M$ bits. The sum and accumulation unit 53 (providing N accumulations) and the divide function provided by the right shifter 58 is a form of filter. The right shifter 58 divides the binary integer produced by the sum and accumulation unit 53, i.e. depending on the number of binary shifts that are performed. A single shift will divide the binary integer by two, two shifts will divide by four and so on. The right shifter 58 therefore provides scaling, again using relatively simple logic.

Finally, the sign extender and latch unit 60 sets and presents a fixed length integer output for the next stage of the neural network.

The values of $U$, $C$ and $N$ can be selected to achieve implementation efficiencies and may be aligned to the binary power values to achieve efficiencies.

It can be analytically proved that the mapping of the FIG. 4 system 40 is described by equation (5).

$$y(n) = \begin{cases} n - \frac{n(n+1)}{2N} & : n \ is \ positive \\ n + \frac{n(n+1)}{2N} & : n \ is \ negative \end{cases} \tag{5}$$

where $N$ is the oversampling rate. This is a closed form expression of equation (4) above and because N is based on integer powers of 2, the division by N or 2N is a simple shift operation that can be performed using combinatorial logic.

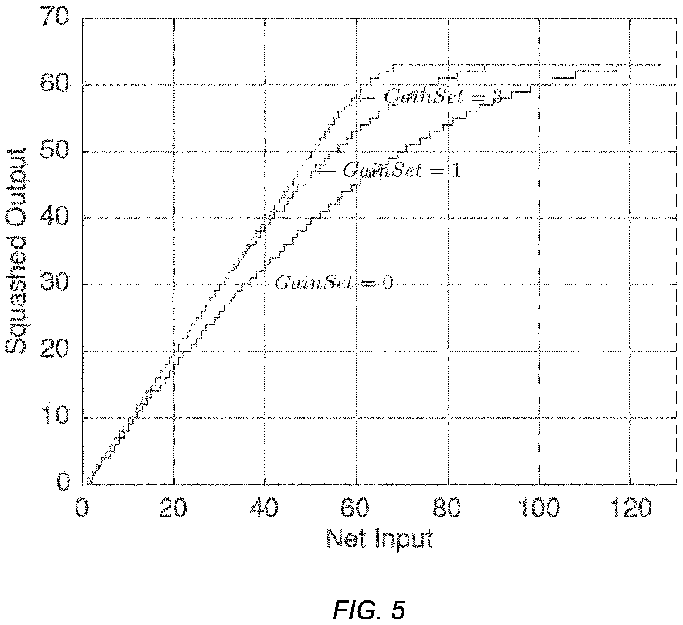

FIG. 5 shows the mapping achieved in VHDL (using ModelSim™ using an FPGA implementation). Here, the value of $R = 8$, $M = -128 \leq M \leq 127$ and the output was non-linearly squashed between $-64 \leq (n) \leq 63$.

The slope of the mapping is also adjustable by modifying the counter values $U = C/2^G$ where G is called the Gainset. Typically Gainset= 0 will be most preferable due to the wider non-linear range but it could serve as a training hyper-parameter within the machine learning training algorithm.

A full resolution mapping will require 128 clocks (in an 8-bit system) to produce an output. This could be a disadvantage and hence some example embodiments may provide an additional reduced oversampling solution.

For example, with an oversampling of $N = 8$, the counter values may be reduced from {-64, -63 ... 0 ... 62, 63} to {±8, ±24, ±40, ±56}. These eight values are very easily generated by a simple binary counter with appropriate padding of the leading and trailing bits.

The reduced oversampling technique is completely parameterizable using a single variable in a VHDL generic statement.

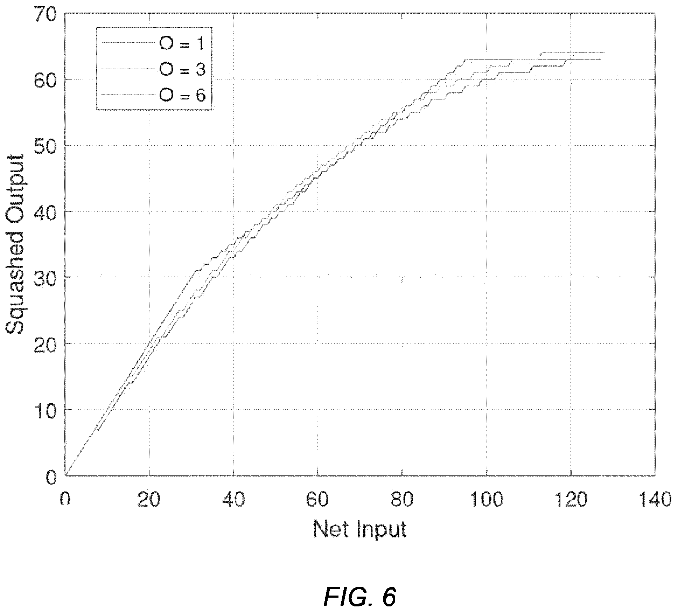

FIG. 6 shows the mapping when oversampling $N$ is increased from 2 (O = 1), 8 (O = 3) and 32 (0 = 6). Here, O is the oversampling factor, where the oversampling rate N is given by $2^0$. The reduced oversampling effectively creates a piecewise linear mapping in which the breakpoints are automatically generated.

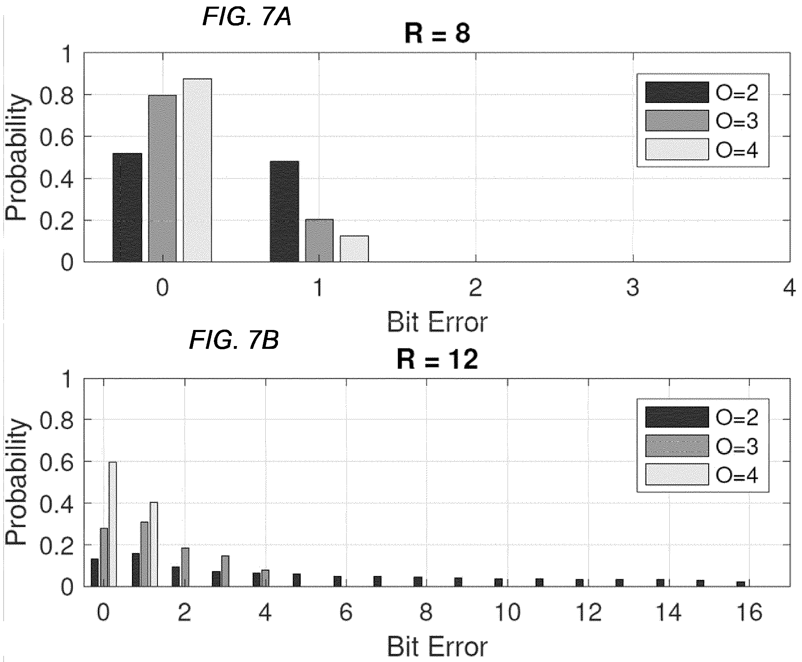

FIGS. 7A and 7B show mapping errors in, respectively, an 8-bit and 12-bit system using oversampling of four (O=2), 8 (O=3) and 16 (O=4). As can be seen, the bit error is a maximum of 1 bit in a 8-bit system and in a 12-bit system the maximum error is 4 bits with O=3 and one bit with O=4.

The reduced oversampling activation function has also been successfully tested with many benchmark datasets.

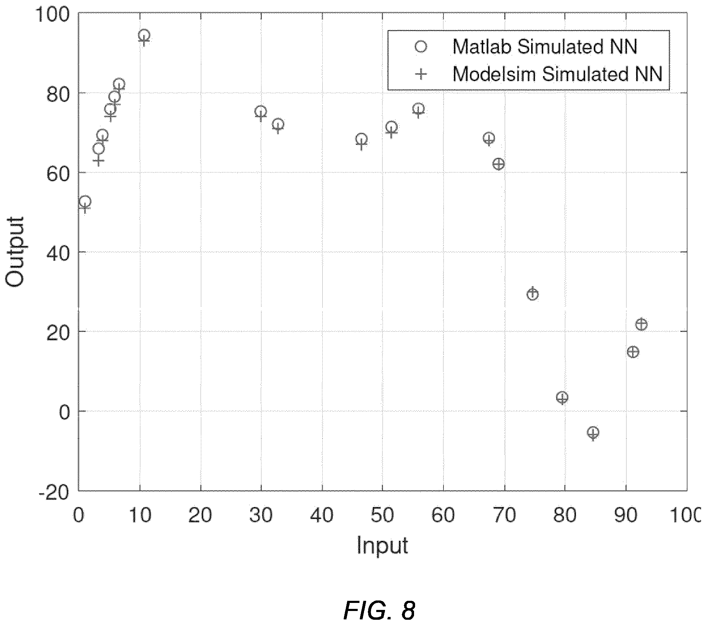

FIG. 8 is a graph showing the results of a simple fit regression dataset, which it can be seen that there is good agreement between Matlab ™ (floating point) and Modesim (fixed-point) data representations, demonstrating the use of example embodiments.

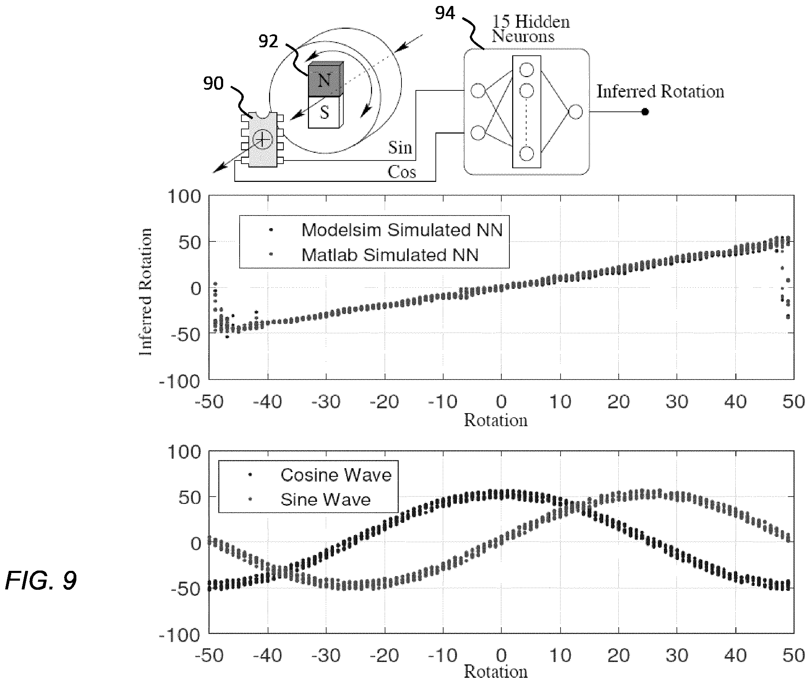

FIG. 9 is a schematic diagram indicating a rotation sensing integrated circuit 90 that uses a magneto resistive sensor to determine rotation. The magnetic field of a magnet 92 mounted on a shaft/wheel rotates with the shaft. The integrated circuit 9o produces two quadrature sinusoids, labelled as Sin and Cos. The lack of purity of the sinusoids as a result of misalignment and non-matching gains could lead to errors in determining shaft angle. Hence, in this application example, a neural network 94 may be justified over, for example, trigonometry, to resolve the issue. The neural network 94 with fifteen hidden nodes was trained with noisy Cos and Sin signals to infer the rotation. The plots show the responses of Matlab ™ and ModelSim ™ using 8 bit activation functions. The inferred rotations are closely matched except at the ± 180 degree rotations corresponding to - 50 and + 50. At these extremes, the noise introduces unresolvable uncertainties when the rotation wraps across ± 180. The neural networks 94 were also tested with 0 = 2, 3 and 4. The classifications showed no difference in accuracy while regression datasets displayed certain variations. This demonstrated that reduced oversampling has little adverse effect on performance accuracy of the datasets, and that the equations (4) and (5) are able to solve classification and regression problems using computationally efficient processes in a hardware friendly way.

It is estimated that the implementation, using gate count (one gate is a NAND gate), can be budgeted as indicated in FIG. 11. The quantities mentioned are merely indicative.

The gate count estimates in FIG. 11 show that the resource usage is relatively small and increasing the resolution from 8 bits to 16 bits, with oversampling of 8 (i.e. 0=3) increases the gate count from 340 to 628. Similarly, increasing accuracy (by increasing the oversampling) from O=3 to O=4 will increase the gate count for 8 bit resolution from 340 to 357 or for 16 bit resolution from 628 to 645.

The above embodiments relate to symmetric activation functions. Other example embodiments may provide asymmetric activation functions. For example, two known asymmetric activation functions include the so-called Exponential Linear Unit (ELU) and SoftPlus functions.

According to some example embodiments, a computationally-efficient alternative to the ELU may be referred to herein as SQLU, given by equation 6 below.

$$y(n) = \begin{cases} n & : n > 0 \\ n + \frac{n^2}{4} & : -2.0 \le n \le 0 \\ -1 & : n < -2.0 \end{cases} \tag{6}$$

According to some other example embodiments, a computationally-efficient alternative to SoftPlus may be referred to herein as SQSoftPlus, given by equation 7 below..

$$y(n) = \begin{cases} n & : n > 0.5 \\ \frac{n+0.5^2}{2} & : -0.5 \le n \le 0.5 \\ 0 & : n < -0.5 \end{cases} \tag{7}$$

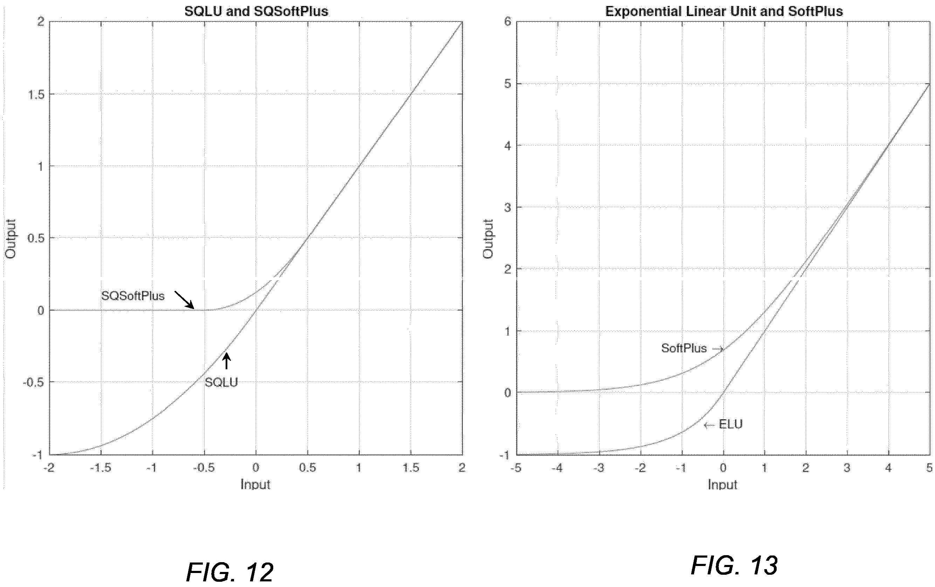

FIG. 12 shows the input to output mappings corresponding to equations (6) and (7) for comparison with FIG. 13 which shows the input to output mappings for the known ELU and SoftPlus functions as indicated.

Purely for illustration, the following table indicates an example implementation of the above-mentioned SQLU and SQSoftPlus functions according to example embodiments, as compared with the known ELU and SoftPlus functions, in respect of both floating point and Q16.16 fixed point calculations on an ARM M3 processor (24 MHz) over 1000 calculation iterations. The selection of processor and number of iterations are merely for indication.

Table 1 - Comparison times for 1000 calculation iterations using Floating Point

| Function | Forward (ms) | Derivative (ms) |
|---|---|---|
| ELU Floating Point | 131.14 | 125.85 |
| SoftPlus Floating Point | 252.83 | 154.58 |
| SQLU Floating Point | 15.33 | 34.42 |
| SQSoftPlus Floating Point | 6.44 | 6.53 |

Table 2 - Comparison times for 1000 calculation iterations using Q16.16 Fixed Point

| Function | Forward (ms) | Derivative (ms) |
|---|---|---|
| ELU Fixed Point | 38.84 | 12.66 |
| SoftPlus Fixed Point | 109.49 | 5.27 |
| SQLU Fixed Point | 1.81 | 0.64 |
| SQSoftPlus Fixed Point | 0.64 | 0.64 |

The timing or "speed up" improvements of the SQLU and SQSoftPlus activation functions are evident, as indicated in Table 3.

Table 3 - Speed up factors based on Table 1 and 2 values

| Function Comparison | Forward Speed Up Factor | Derivative Speed Up Factor |
|---|---|---|
| SQLU v ELU Floating Point | 8.55 | 3.66 |
| SQSoftPlus v SoftPlus Floating Point | 39.23 | 23.68 |
| SQLU v ELU Fixed Point | 19.22 | 19.83 |

(continued)

| Function Comparison | Forward Speed Up Factor | Derivative Speed Up Factor |
|---|---|---|
| SQSoftPlus v SoftPlus Fixed Point | 169.79 | 8.18 |

In terms of how to implement the above SQLU and SQSoftPlus activation functions, example embodiments employ hard non-linearity and a time average to produce asymmetric non-linearities.

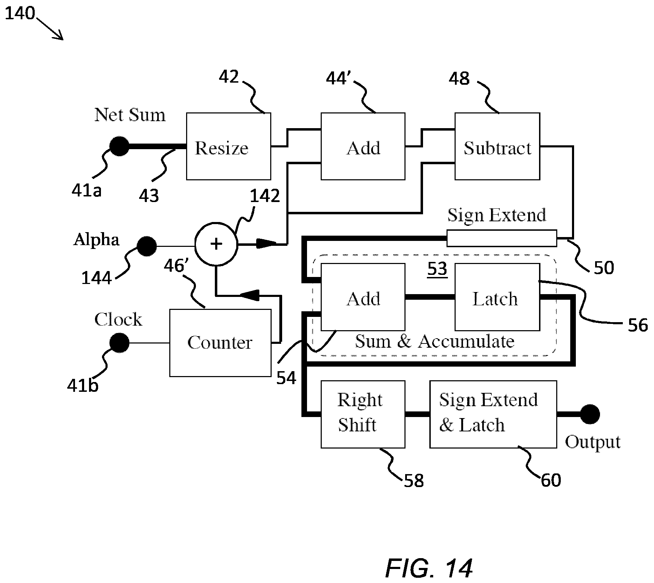

Referring again to FIGS. 12 and 13, it will be seen that the shown functions exhibit non-linearity at the lower end of the mappings. These may be obtained by introduction of asymmetry at a number of points, for example by using a system 140 as shown schematically in FIG. 14. It will be seen that the system 140 in FIG. 14 is similar to the system 40 shown in FIG. 4 (described above for the symmetric activation function). The differences are explained below, with different reference numerals indicating differently-configured modules, although they may employ the same or equivalent hardware. Otherwise, the modules and their respective purposes may be considered identical or substantially identical to those described in relation to FIG. 4.

First, a counter 46' is configured to provide a sequence of only negative numbers. For example, assuming an 8-bit setup, the non-repeating sequence, generated by the counter 46', may be selected to be signed integers {-128, -127, ... , -1} for full resolution. Contrast this with the above-described example whereby the counter 46 of the FIG. 4 system 40 generates a sequence comprising signed integers {-64, -63, ..., 63} which are negative and positive.

Another difference is that a first adder 44' is configured such that its saturation is asymmetrical about zero, e.g. from -M/2 to M or similar. Contrast this with the symmetrical saturation of the first adder 44 described in relation to the system 40 of FIG. 4.

Additional modules are provided in terms of an adder 142 and an alpha input or port 144 which provides one input to the adder. The other input to the adder 142 is the sequence of negative numbers from the counter 46'. The output of the adder 142 is provided to an input of the first adder 44'. The alpha input 144 can therefore be used to vary the saturation level using a binary number.

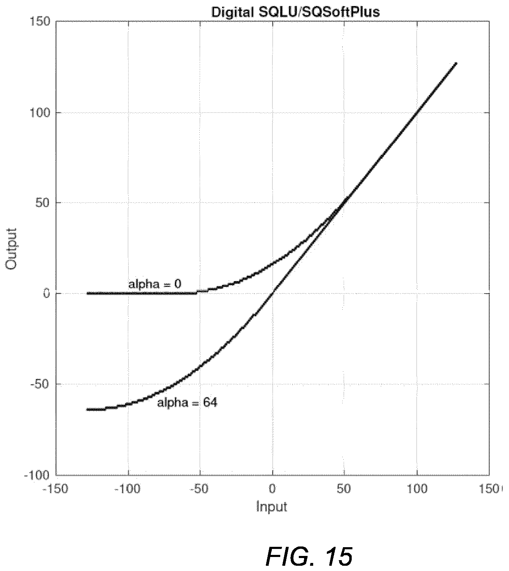

FIG. 15 shows the input to output mapping resulting from a simulation of the FIG. 14 system 140, the simulation employing a hardware description language (e.g. VHDL) and verified using parametric variations, e.g. in terms of resolution, oversampling and the value of alpha. Two plots are shown to indicate mapping results for both SQLU and SQSoftPlus using alpha equal to zero and alpha equal to 64.

For reduced oversampling, e.g. with O = 3, the sequence in an 8-bit system may be {-120, -104, -88, -72, -56, -40, -24, -8}. The generation of this sequence may be based around a simple binary counter with appropriate padding of leading and trailing bits.

Thus, there are clear computational advantages to implementing the SQLU and/or SQSoftPlus activation functions over ELU and SoftPlus. Equations (6) and (7) above may be used for offline training and hence transferring a trained network to a hardware inference engine may be performed. A digital logic equivalent of equations (6) and (7) can be provided using standard logic gates, which may be resource-efficient and occupy a much smaller footprint in terms of integrated circuit real-estate. The digital logic equivalent may be parameterised and hence the change from SQLU to SQSOftPlus can be effected by changing a single binary word. The alpha parameter can vary the saturation level and hence can serve as a hyper-parameter in training algorithms. The digital logic equivalent may approximate the performance of equations (6) and (7) above whereas said equations could be provided in a machine learning software package, e.g. as one or more built-in functions.

Example embodiments offer apparatuses, systems and methods that can provide a non-linear activation function using significantly fewer resources than apparatuses and systems requiring an FPU. This permits implementation of complete or partial neural networks on a wider range of devices, including relatively inexpensive, small and/or low or battery-powered devices and also the construction of bigger inference engine with many activation functions, thus speeding up the inference process.

As described herein, a memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1. Apparatus (40, 140) for implementing an activation function for use in a neural network, comprising means for:

receiving first input data (41a) at a sample rate $fs$, the first data representing fixed-length integer values from part of a machine learning model;

providing second input data (41b) at an oversampling rate $Nfs$, wherein $N$ is an integer greater than one, the second input data representing a sequence of non-repeating integers;

summing (44, 44') the first and second input data to produce first output data, wherein the summed output is limited within a predetermined first output range C;

subtracting (48) the second input data from the first output data to produce second output data, wherein the second output data is limited within a predetermined second output range;

processing the second output data to perform a binary filtering operation to produce third output data, **characterized in that** the processing the second output data to perform the binary filtering operation comprises accumulating (53) a predetermined number of sequential values to produce fourth output data and performing a right shift operation (58) on the binary representation of said fourth output data to produce the third output data.

2. The apparatus of claim 1, wherein the accumulating comprises using an adder and latch to accumulate the predetermined number of sequential values.

3. The apparatus of claim 1 or claim 2, further comprising:
means for setting the first input data, prior to input to the summing means, to a predetermined first fixed-length integer value of $R$ bits.

4. The apparatus of any preceding claim, further comprising:
means for increasing the number of bits of the second output data to a second fixed-length integer for input to the processing means.

5. The apparatus of any preceding claim, further comprising:
means for, subsequent to performing a right shift operation on the binary representation of said fourth output data, providing the third output data with a fixed length integer output.

6. The apparatus of any preceding claim, wherein the sequence of non-repeating numbers is produced by a binary counter, wherein optionally the counter has a count range $-U \to (U - 1)$ and the oversampling rate $N\,fs$ is an integer multiple of the count range $2 \times U$.

7. The apparatus of claim 6, wherein $N$ is based on an integer power of two, and the right shift operation is dependent on the value of $N$.

8. The apparatus of any preceding claim, wherein the first output range $C$ is a signed integer limited to a maximum positive and negative value based on the range $M$ of the first input data and, optionally, wherein the predetermined first output range $C$ is defined as:

$$C = M/2.$$

9. The apparatus of any preceding claim, wherein the predetermined second output range is equal to the range $M$ of the first input data.

10. The apparatus of any of claims 1 to 6, wherein the sequence of non-repeating integers comprises only negative numbers and the oversampling rate $N\,fs$ is an integer multiple of the count range $2 \times U.$

11. The apparatus of claim 10, wherein *N* is based on an integer power of two, and the right shift operation is dependent on the value of *N*.

12. The apparatus of claim 10 or claim 11, wherein the first output range *C* is configured to have asymmetric upper and lower limits.

13. The apparatus of claim 12, further comprising means for varying the upper and lower limits, wherein optionally the varying means comprises means for summing a variable alpha input and the sequence of non-repeating integers numbers to provide modified second input data.

14. A system, comprising multiple apparatuses according to any preceding claim, arranged to operate substantially in parallel to provide the activation function of neurons of a neural network.

15. An hardware-implemented method for implementing in an apparatus according to any of claims 1 to 13 or in a system according to claim 14 an activation function for use in a neural network, the method comprising:

receiving first input data (41a) at a sample rate *fs*, the first data representing fixed-length integer values from part of a machine learning model;
providing second input data (41b) at an oversampling rate *Nfs* , wherein *N* is an integer greater than one, the second input data representing a sequence of non-repeating integers;
summing (44,44') the first and second input data to produce first output data, wherein the summed output is limited within a predetermined first output range C;
subtracting (48) the second input data from the first output data to produce second output data, wherein the second output data is limited within a predetermined second output range;
processing the second output to perform a binary filtering operation to produce third output data,
**characterized in that**
processing the second output data to perform the binary filtering operation comprises accumulating a predetermined number of sequential values to produce fourth output data and performing a right shift operation on the binary representation of said fourth output data to produce the third output data.

## Patentansprüche

1. Einrichtung (40, 140) zum Implementieren einer Aktivierungsfunktion zur Verwendung in einem neuronalen Netzwerk, die Mittel für Folgendes umfasst:

Empfangen von ersten Eingabedaten (41a) mit einer Abtastrate *fs,* wobei die ersten Daten ganzzahlige Werte fester Länge von einem Teil eines Maschinenlernmodells repräsentieren;
Bereitstellen von zweiten Eingabedaten (41b) mit einer Überabtastrate *Nfs,* wobei *N* eine Ganzzahl größer als eins ist, wobei die zweiten Eingabedaten eine Folge von sich nicht wiederholenden Ganzzahlen repräsentieren;
Summieren (44, 44') der ersten und der zweiten Eingabedaten, um erste Ausgabedaten zu produzieren, wobei die summierte Ausgabe in einem vorbestimmten ersten Ausgabebereich C begrenzt ist;
Subtrahieren (48) der zweiten Eingabedaten von den ersten Ausgabedaten, um zweite Ausgabedaten zu produzieren, wobei die zweiten Ausgabedaten in einem vorbestimmten zweiten Ausgabebereich begrenzt sind;
Verarbeiten der zweiten Ausgabedaten, um eine binäre Filteroperation durchzuführen, um dritte Ausgabedaten zu produzieren,
**dadurch gekennzeichnet, dass** das Verarbeiten der zweiten Ausgabedaten, um die binäre Filteroperation durchzuführen, das Akkumulieren (53) einer vorbestimmten Anzahl von sequenziellen Werten, um vierte Ausgabedaten zu produzieren, und das Durchführen einer Operation einer Rechtsverschiebung (58) an der binären Repräsentation der vierten Ausgabedaten, um die dritten Ausgabedaten zu produzieren, umfasst.

2. Einrichtung nach Anspruch 1, wobei das Akkumulieren das Verwenden eines Addierers und einer Speicherzelle umfasst, um die vorbestimmte Anzahl von sequenziellen Werten zu akkumulieren.

3. Einrichtung nach Anspruch 1 oder Anspruch 2, die ferner Folgendes umfasst:
Mittel zum Einstellen der ersten Eingabedaten, bevor sie in die Summierungsmittel eingegeben werden, auf einen vorbestimmten ersten ganzzahligen Wert fester Länge von R Bits.

4. Einrichtung nach einem der vorhergehenden Ansprüche, die ferner Folgendes umfasst:
Mittel zum Erhöhen der Anzahl von Bits der zweiten Ausgabedaten auf eine zweite Ganzzahl fester Länge zur Eingabe in die Verarbeitungsmittel.

5. Einrichtung nach einem der vorhergehenden Ansprüche, die ferner Folgendes umfasst:
nach dem Durchführen einer Operation einer Rechtsverschiebung an der binären Repräsentation der vierten Ausgabedaten Mittel zum Bereitstellen der dritten Ausgabedaten mit einer Ausgabe einer Ganzzahl fester Länge.

6. Einrichtung nach einem der vorhergehenden Ansprüche, wobei die Folge von sich nicht wiederholenden Zahlen von einem binären Zähler produziert wird, wahlweise wobei der Zähler einen Zählbereich $-U \rightarrow (U\text{-}1)$ aufweist und die Überabtastrate $Nfs$ ein ganzzahliges Vielfaches des Zählbereichs $2 \times U$ ist.

7. Einrichtung nach Anspruch 6, wobei $N$ auf einer ganzzahligen Zweierpotenz basiert und die Operation der Rechtsverschiebung vom Wert von $N$ abhängig ist.

8. Einrichtung nach einem der vorhergehenden Ansprüche, wobei der erste Ausgabebereich $C$ eine Ganzzahl mit Vorzeichen ist, die auf Basis des Bereichs M der ersten Eingabedaten auf einen maximalen positiven und negativen Wert begrenzt ist, wahlweise wobei der vorbestimmte erste Ausgabebereich $C$ definiert ist als:

$$C = M/2.$$

9. Einrichtung nach einem der vorhergehenden Ansprüche, wobei der vorbestimmte zweite Ausgabebereich gleich dem Bereich M der ersten Eingabedaten ist.

10. Einrichtung nach einem der Ansprüche 1 bis 6, wobei die Folge von sich nicht wiederholenden Zahlen nur negative Zahlen umfasst und die Überabtastrate $Nfs$ ein ganzzahliges Vielfaches des Zählbereichs $2 \times U$ ist.

11. Einrichtung nach Anspruch 10, wobei $N$ auf einer ganzzahligen Zweierpotenz basiert und die Operation der Rechtsverschiebung vom Wert von $N$ abhängig ist.

12. Einrichtung nach Anspruch 10 oder Anspruch 11, wobei der erste Ausgabebereich $C$ dazu ausgelegt ist, einen asymmetrischen oberen und unteren Grenzwert aufzuweisen.

13. Einrichtung nach Anspruch 12, die ferner Mittel zum Variieren des oberen und des unteren Grenzwerts umfasst, wahlweise wobei die Variierungsmittel Mittel zum Summieren einer variablen Alphaeingabe und der Folge von sich nicht wiederholenden ganzzahligen Zahlen umfassen, um modifizierte zweite Eingabedaten bereitzustellen.

14. System, das mehrere Einrichtungen gemäß einem der vorhergehenden Ansprüche umfasst, die angeordnet sind, im Wesentlichen parallel betrieben zu werden, um die Aktivierungsfunktion von Neuronen eines neuronalen Netzwerks bereitzustellen.

15. Hardwareimplementiertes Verfahren zum Implementieren einer Aktivierungsfunktion zur Verwendung in einem neuronalen Netzwerk in einer Einrichtung gemäß einem der Ansprüche 1 bis 13 oder in einem System gemäß Anspruch 14, wobei das Verfahren Folgendes umfasst:

Empfangen von ersten Eingabedaten (41a) mit einer Abtastrate $fs$, wobei die ersten Daten ganzzahlige Werte fester Länge von einem Teil eines Maschinenlernmodells repräsentieren;
Bereitstellen von zweiten Eingabedaten (41b) mit einer Überabtastrate $Nfs$, wobei $N$ eine Ganzzahl größer als eins ist, wobei die zweiten Eingabedaten eine Folge von sich nicht wiederholenden Ganzzahlen repräsentieren;
Summieren (44, 44') der ersten und der zweiten Eingabedaten, um erste Ausgabedaten zu produzieren, wobei die summierte Ausgabe in einem vorbestimmten ersten Ausgabebereich C begrenzt ist;
Subtrahieren (48) der zweiten Eingabedaten von den ersten Ausgabedaten, um zweite Ausgabedaten zu produzieren, wobei die zweiten Ausgabedaten in einem vorbestimmten zweiten Ausgabebereich begrenzt sind;
Verarbeiten der zweiten Ausgabe, um eine binäre Filteroperation durchzuführen, um dritte Ausgabedaten zu produzieren,
**dadurch gekennzeichnet, dass** das Verarbeiten der zweiten Ausgabedaten, um die binäre Filteroperation durchzuführen, das Akkumulieren einer vorbestimmten Anzahl von sequenziellen Werten, um vierte Ausgabedaten zu produzieren, und das Durchführen einer Operation einer Rechtsverschiebung an der binären Repräsentation der vierten Ausgabedaten, um die dritten Ausgabedaten zu produzieren, umfasst.

**Revendications**

1. Appareil (40, 140) pour mettre en œuvre une fonction d'activation à utiliser dans un réseau neuronal, comprenant des moyens pour :

   recevoir d'une partie d'un modèle d'apprentissage machine des premières données d'entrée (41a) à une fréquence d'échantillonnage $fs$, les premières données représentant des valeurs d'entiers de longueur fixe ;
   fournir des deuxièmes données d'entrée (41b) à une fréquence de suréchantillonnage $Nfs$, où $N$ est un entier supérieur à un, les deuxièmes données d'entrée représentant une séquence d'entiers non répétitifs ;
   additionner (44, 44') les premières et deuxièmes données d'entrée pour produire des premières données de sortie, dans lequel la sortie additionnée est limitée dans une première plage de sortie $C$ prédéterminée ;
   soustraire (48) les deuxièmes données d'entrée des premières données de sortie pour produire des deuxièmes données de sortie, dans lequel les deuxièmes données de sortie sont limitées dans une deuxième plage de sortie prédéterminée ;
   traiter les deuxièmes données de sortie pour effectuer une opération de filtrage binaire afin de produire des troisièmes données de sortie,
   **caractérisé en ce que** le traitement des deuxièmes données de sortie pour effectuer l'opération de filtrage binaire comprend le cumul (53) d'un nombre prédéterminé de valeurs séquentielles pour produire des quatrièmes données de sortie, et la réalisation d'une opération de décalage à droite (58) sur la représentation binaire desdites quatrièmes données de sortie pour produire les troisièmes données de sortie.

2. Appareil selon la revendication 1, dans lequel le cumul comprend l'utilisation d'un additionneur et d'un verrou pour cumuler le nombre prédéterminé de valeurs séquentielles.

3. Appareil selon la revendication 1 ou la revendication 2, comprenant en outre :
   des moyens pour régler les premières données d'entrée avant leur entrée dans les moyens de sommation sur une première valeur d'entier de longueur fixe prédéterminée de $R$ bits.

4. Appareil selon l'une des revendications précédentes, comprenant en outre :
   des moyens pour augmenter le nombre des bits des deuxièmes données de sortie jusqu'à un deuxième entier de longueur fixe pour l'entrée dans les moyens de traitement.

5. Appareil selon l'une des revendications précédentes, comprenant en outre :
   des moyens pour, après avoir effectué une opération de décalage à droite sur la représentation binaire desdites quatrièmes données de sortie, fournir les troisièmes données de sortie avec une sortie d'entier de longueur fixe.

6. Appareil selon l'une des revendications précédentes, dans lequel la séquence de nombres non répétitifs est produite par un compteur binaire, dans lequel facultativement, le compteur a une plage de compte $-U \rightarrow (U\text{-}1)$, et la fréquence de suréchantillonnage $N\,fs$ est un multiple entier de la plage de compte $2 \times U$.

7. Appareil selon la revendication 6, dans lequel $N$ est basé sur une puissance d'entier de deux, et l'opération de décalage à droite dépend de la valeur de $N$.

8. Appareil selon l'une des revendications précédentes, dans lequel la première plage de sortie $C$ est un entier signé limité à une valeur positive et négative maximale basée sur la plage $M$ des premières données d'entrée, et facultativement dans lequel la première plage de sortie $C$ prédéterminée est définie comme suit :

$$C = M/2 \,.$$

9. Appareil selon l'une des revendications précédentes, dans lequel la deuxième plage de sortie prédéterminée est égale à la plage $M$ des premières données d'entrée.

10. Appareil selon l'une des revendications 1 à 6, dans lequel la séquence d'entiers non répétitifs comprend uniquement des nombres négatifs, et la fréquence de suréchantillonnage *Nfs* est un multiple entier de la plage de compte *2 × U.*

11. Appareil selon la revendication 10, dans lequel *N* est basé sur une puissance d'entier de deux, et l'opération de décalage à droite dépend de la valeur de *N*.

12. Appareil selon la revendication 10 ou la revendication 11, dans lequel la première plage de sortie *C* est configurée pour avoir des limites supérieure et inférieure asymétriques.

13. Appareil selon la revendication 12, comprenant en outre des moyens pour faire varier les limites supérieure et inférieure, dans lequel facultativement, les moyens de variation comprennent des moyens pour additionner une entrée alpha variable et la séquence de nombres entiers non répétitifs pour fournir des deuxièmes données d'entrée modifiées.

14. Système comprenant de multiples appareils selon l'une des revendications précédentes agencés pour fonctionner sensiblement en parallèle afin de fournir la fonction d'activation de neurones d'un réseau neuronal.

15. Procédé mis en œuvre par matériel pour mettre en œuvre une fonction d'activation à utiliser dans un réseau neuronal dans un appareil selon l'une des revendications 1 à 13 ou dans un système selon la revendication 14, le procédé comprenant les étapes suivantes :

recevoir d'une partie d'un modèle d'apprentissage machine des premières données d'entrée (41a) à une fréquence d'échantillonnage *fs*, les premières données représentant des valeurs d'entiers de longueur fixe ;
fournir des deuxièmes données d'entrée (41b) à une fréquence de suréchantillonnage *Nfs,* où *N* est un entier supérieur à un, les deuxièmes données d'entrée représentant une séquence d'entiers non répétitifs ;
additionner (44, 44') les premières et deuxièmes données d'entrée pour produire des premières données de sortie, dans lequel la sortie additionnée est limitée dans une première plage de sortie C prédéterminée ;
soustraire (48) les deuxièmes données d'entrée des premières données de sortie pour produire des deuxièmes données de sortie, dans lequel les deuxièmes données de sortie sont limitées dans une deuxième plage de sortie prédéterminée ;
traiter pour effectuer une opération de filtrage binaire afin de produire des troisièmes données de sortie, **caractérisé en ce que** le traitement des deuxièmes données de sortie pour effectuer l'opération de filtrage binaire comprend le cumul d'un nombre prédéterminé de valeurs séquentielles pour produire des quatrièmes données de sortie, et la réalisation d'une opération de décalage à droite sur la représentation binaire desdites quatrièmes données de sortie pour produire les troisièmes données de sortie.

FIG. 1

FIG. 4

FIG. 2

FIG. 3

*FIG. 5*

*FIG. 6*

FIG. 7A

R = 8

FIG. 7B

R = 12

*FIG. 8*

FIG. 9

$$AF\left(b + \sum_{i=1}^{n} n_i w_i\right) \longrightarrow \text{Output Y}$$

FIG. 10

| Register width | 8 | 8 | 8 | 8 | 12 | 12 | 12 | 12 | 16 | 16 |
|---|---|---|---|---|---|---|---|---|---|---|
| Oversampling, 2^O | 2 | 3 | 4 | 7 | 2 | 3 | 4 | 11 | 3 | 4 |
| Adder | 72 | 72 | 72 | 72 | 108 | 108 | 108 | 108 | 144 | 144 |
| Substractor | 81 | 81 | 81 | 81 | 121 | 121 | 121 | 121 | 161 | 161 |
| Counter | 8 | 12 | 16 | 28 | 8 | 12 | 16 | 44 | 12 | 16 |
| Sum & Accumulate | 90 | 99 | 108 | 135 | 126 | 135 | 144 | 207 | 171 | 180 |
| Sum & Accumulate Register | 40 | 44 | 48 | 60 | 56 | 60 | 64 | 92 | 76 | 80 |
| Output Register | 32 | 32 | 32 | 32 | 48 | 48 | 48 | 48 | 64 | 64 |
| Gate Count | 323 | 340 | 357 | 408 | 467 | 484 | 501 | 620 | 628 | 645 |

FIG. 11

*FIG. 13*

*FIG. 12*

*FIG. 14*

*FIG. 15*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- SONL: A New Computationally Efficient Acivation Function. **WURAOLA ADEDAMOLA et al.** 2018 International Joint Conference on Neural Networks (IJCNN). IEEE, 08 July 2018